# EUROPEAN PATENT APPLICATION

(11) **EP 2 236 911 A2**
(43) Date of publication of application: **06.10.2010**
(21) Application number: 10003513.8
(22) Date of filing: 31.03.2010
(51) Int. Cl.: F21S 8/00, F21V 11/10, F21W 131/406

(54) **An improved automated luminaire iris**

(30) Priority: 31.03.2009 US 165289 P; 30.03.2010 US 749668
(71) Applicant: ROBE lighting s.r.o., 75661 Roznov pod Radhostem (CZ)
(72) Inventor: Jurik, Pavel, 75661 Roznov pod Radhostem (CZ)
(74) Representative: Käck, Jürgen

(57) **Abstract**

Described are an improved automated luminaire and luminaire systems employing an improved iris **(40).** The iris **(40)** is improved by simultaneously improving the thermal conductivity of the system for conducting away heat and the use of a bearing race **(41)** within the iris structure **(40)**.

## Description

### TECHNICAL FIELD OF THE INVENTION

The present invention generally relates to an automated luminaire, specifically to an iris for use within an automated luminaire.

### BACKGROUND OF THE INVENTION

Luminaires with automated and remotely controllable functionality are well known in the entertainment and architectural lighting markets. Such products are commonly used in theatres, television studios, concerts, theme parks, night clubs and other venues. A typical product will commonly provide control over the pan and tilt functions of the luminaire allowing the operator to control the direction the luminaire is pointing and thus the position of the light beam on the stage or in the studio. Typically this position control is done via control of the luminaire's position in two orthogonal rotational axes usually referred to as pan and tilt. Many products provide control over other parameters such as the intensity, color, focus, beam size, beam shape and beam pattern. The beam pattern is often provided by a stencil or slide called a gobo which may be a steel, aluminum or etched glass pattern. The products manufactured by Robe Show Lighting such as the ColorSpot 700E are typical of the art.

The optical systems of such luminaires may include a gate or aperture through which the light is constrained to pass. Mounted in or near this gate may be devices such as gobos, patterns, irises, color filters or other beam modifying devices as known in the art. The use of a variable aperture or iris diaphragm allows control over the size of the output beam and thus the size of the image projected onto a surface. When placed in the optical path within a luminaire removed from a focal point the iris may be used to serve the role of a variable dimmer either progressively decreasing or increasing the light intensity as the iris either closes or opens respectively.

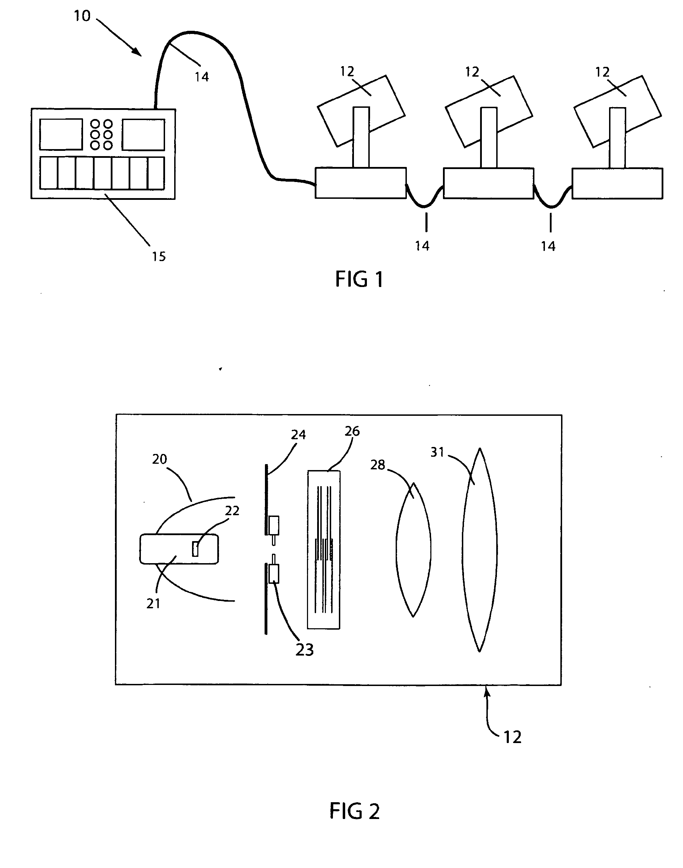

**Figure 1** illustrates a multiparameter automated luminaire system **10.** These systems commonly include a plurality of multiparameter automated luminaires **12** which typically each contain on-board a light source (not shown), light modulation devices, electric motors coupled to mechanical drives systems and control electronics (not shown). In addition to being connected to mains power either directly or through a power distribution system (not shown), each luminaire is connected in series or in parallel to data link **14** to one or more control desks **15.** The luminaire system **10** is typically controlled by an operator through the control desk **15.**

**Figure 2** illustrates a prior art automated luminaire **12.** A lamp **21** contains a light source **22** which emits light. The light is reflected and controlled by reflector **20** through an aperture or imaging gate **24** and then through a variable aperture **23.** The resultant light beam may be further constrained, shaped, colored and filtered by optical devices **26** which may include dichroic color filters, gobos, rotating gobos, framing shutters, effects glass and other optical devices well known in the art. The final output beam may be transmitted through output lenses **28** and **29** which may form a zoom lens system.

Variable aperture **23** is most commonly constructed as an iris diaphragm which contains a series of overlapping leaves that may be adjusted by a single lever or gear to control the effective size of the aperture.

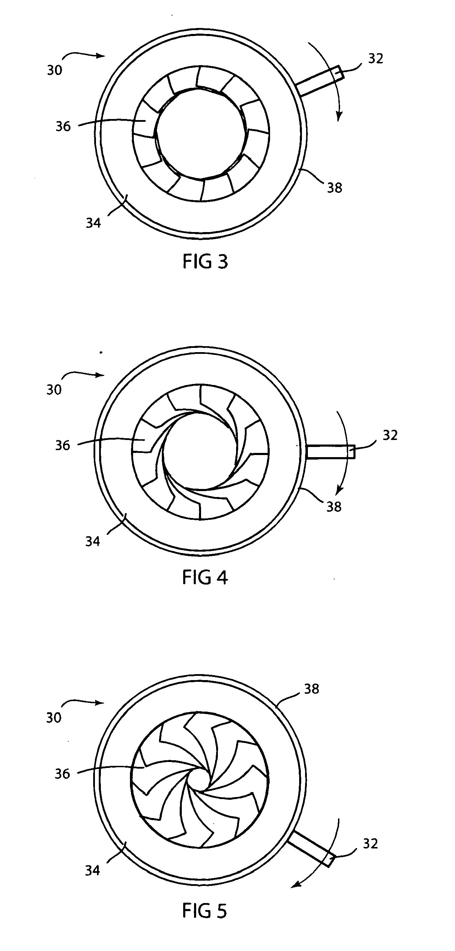

**Figure 3, 4, 5****,** **6, 7 and 8** illustrate the construction and operation of a prior art example of an iris diaphragm **30.** Iris diaphragms are well known in the art and have been utilized as variable apertures in luminaires for many years. Iris diaphragms in automated luminaires typically employ multiple thin leaves **36** which are constrained on both sides to avoid problems caused by buckling of the thin leaves **36** due to the inherent high temperature operating conditions frequently found in an automated luminaire.

**Figure 3, 4, 5****,** **6, 7 and 8** illustrate such an iris diaphragm where both ends of the leaves **36** are constrained by housing **38** and stationary ring **34.** Handle **32** of actuator ring **37** to which one end of each of the leaves **36** are pivotally attached. The other end of leaves **36** have tabs **35** which ride in slots **39** in stationary ring **34** which is in turn fixed to stationary housing **38** constraining the movement of the leaves **36.** Leaves **36** are held within slots **39** of the stationary rung **34** by pressure applied to the underside of actuator ring **37** by stationary housing **38.** As the handle **32** is rotated in one direction, the leaves individually rotate about their pivoted ends they are constrained by tab **35** and slot **39** and occlude an increasing amount of the central aperture space. When the handle **32** moves in the opposite direction the leaves **36** occlude a decreasing amount of the central aperture space.

**Figure 3** illustrates an iris diaphragm **30** in a position where actuator **32** is at one extreme of its motion and leaves **36** are fully thus maximizing the central aperture.

**Figure 4** illustrates an iris diaphragm **30** in a position where actuator **32** is at its midpoint and leaves **36** have been rotated to their midpoint thus occluding a portion of the central aperture. Note that the resultant aperture formed by the juxtaposition of the leaves is not a true circle. The more leaves **36** that are used in the design the closer to circular the resultant aperture. Using more leaves **36** also tends to increase the friction in the system and the risk of problems in opening and closing of the iris particularly in high temperature conditions.

**Figure 5** illustrates an iris diaphragm **30** in a position where actuator **32** is at the other extreme of its motion and leaves **36** are fully rotated thus occluding the majority of the central aperture. It can be seen that as previously discussed actuator ring **37** is in contact with the inside surface of fixed housing **38** and thus there is considerable friction between these two surfaces particularly in higher temperature or in varying temperature conditions. Prior art devices have made various attempts to minimize this friction by using lubricants or coatings on the mating surfaces of actuator ring **37** and stationary housing **38** however these coatings and lubricants frequently cause increased friction at the high operating temperatures of automated luminaires. Increased friction in the rotation of actuator ring **37** may result in jerky or steppy movement visible to the audience and, in extreme cases, may result in the iris diaphragm becoming so stiff to move that the small stepper motor frequently utilized to move actuator **32** is unable to overcome that friction and the iris becomes stuck. Such a system is also prone to increased problems due to accumulation of dust and dirt as the fixture ages and is maintained. Further problems may arise from the poor thermal transfer of heat from leaves **36** through actuator ring 37 to stationary housing **38.**

There is a need for an improved iris diaphragm mechanism for automated luminaire which provides reduced and consistent friction between the operating components and improved thermal transfer to allow operation at a wide range of operating temperatures.

### SUMMARY OF THE INVENTION

The invention is defined in claims 1, 5 and 6, respectively. Particular embodiments of the invention are set out in the dependent claims.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:

**FIGURE 1** illustrates a typical automated lighting system;

**FIGURE 2** illustrates a typical automated luminaire;

**FIGURE 3** illustrates a prior art iris diaphragm;

**FIGURE 4** illustrates a prior art iris diaphragm;

**FIGURE 5** illustrates a prior art iris diaphragm;

**FIGURE 6** illustrates a prior art iris diaphragm;

**FIGURE 7** illustrates a prior art iris diaphragm;

**FIGURE 8** illustrates a prior art iris diaphragm;

**FIGURE 9** illustrates an embodiment of the invention;

**FIGURE 10** illustrates an embodiment of the invention;

**FIGURE 11** illustrates an embodiment of the invention;

### DETAILED DESCRIPTION OF THE INVENTION

Preferred embodiments of the present invention are illustrated in the **FIGUREs,** like numerals being used to refer to like and corresponding parts of the various drawings.

The present invention generally relates to an automated luminaire, specifically to the configuration of an iris diaphragm within such a luminaire such that the mechanism supporting movement of the iris diaphragm provides reduced and consistent friction between the operating components at a wide range of operating temperatures.

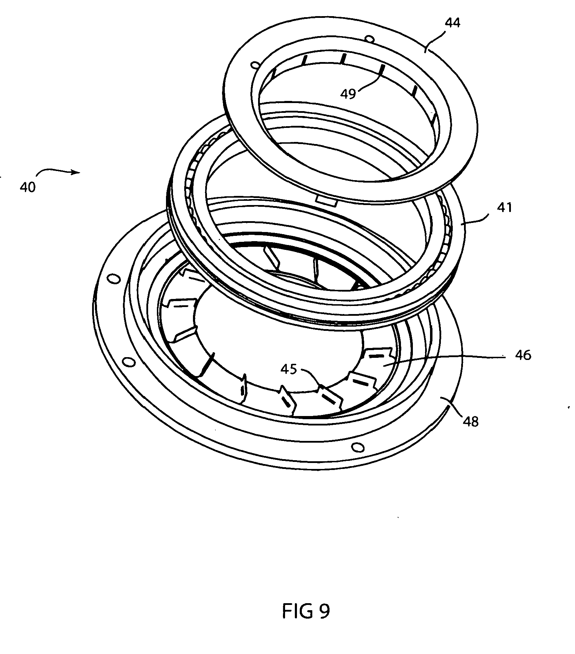

**Figure 9** illustrates an exploded drawing of an embodiment of the invention. Iris diaphragm **40** comprises a set of leaves **46** that may be rotated to variably occlude a central aperture.

The first, outer, ends (not shown) of leaves **46** are pivotally attached to stationary housing **48** such that leaves **46** may rotate across the central aperture. The second, inner, ends of leaves **46** have tabs **45** which ride in slots **49** in actuator ring **44.** Actuator ring **44** may be rotated by an external motor drive system (not shown); such motorized operation is well known in the art. The motor may be of a type selected from a list comprising but not limited to, stepper motors, servo motors, and linear actuators. As actuator ring **47** rotates it links the rotation through slots **49** to tabs **45** on leaves **46.** As leaves **46** individually rotate about their pivoted ends they are constrained by tab **45** and slot **49** to occlude an increasing amount of the central aperture. Leaves **46** are held within slots **49** of the actuator ring **44** by pressure applied to the underside of actuator ring **44** through ball bearing race **41** to stationary housing **48.**

Bearing race **41** provides a first improvement over the prior art by providing a controlled low friction bearing surface through ball bearing race **41** between the actuator ring **44** and stationary housing **48.** Ball bearing race **41** provides smooth and consistent motion for the actuator ring **44.**

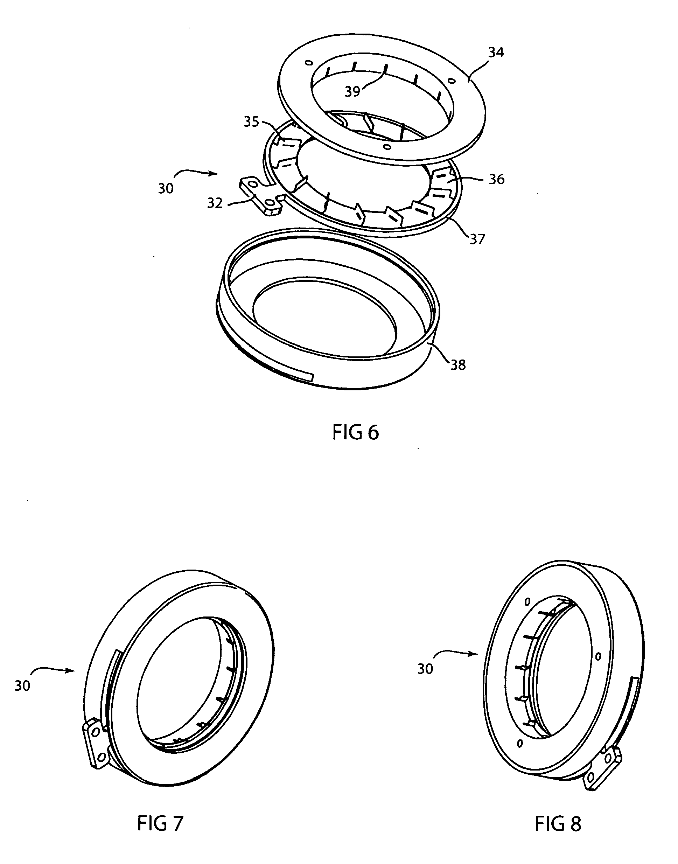

A further improvement of the invention over the prior art is provided by fixing the stationary end of leaves **46** directly to the stationary housing **48** rather than through an intermediate ring (shown as **37** in **Figure 6**). This direct connection to stationary housing **48** provides an improved heat path with lower thermal resistance from leaves **46** to stationary housing **48** and thus to the chassis of the luminaire. This allows heat from the leaves heated by the light from the luminaire to pass readily from the leaves thus keeping them at a lower temperature and reducing distortion and warping due to excessive heat.

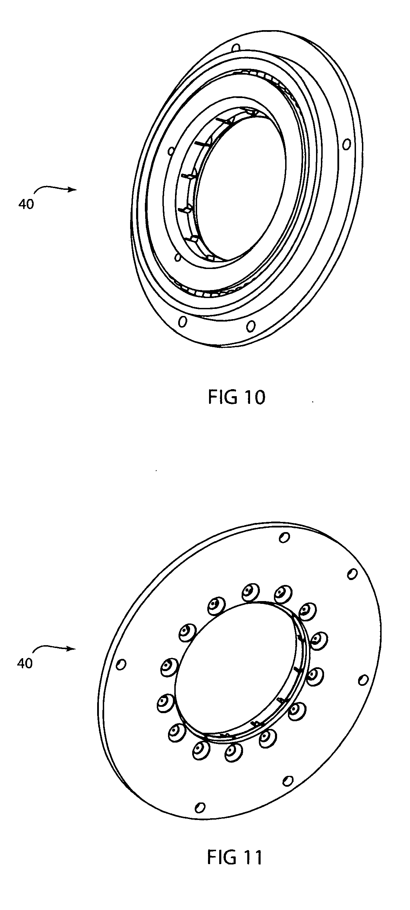

**Figures 10** and **11** illustrate an embodiment of the invention in its final assembled state.

While the disclosure has been described with respect to a limited number of embodiments, those skilled in the art, having benefit of this disclosure, will appreciate that other embodiments may be devised which do not depart from the scope of the disclosure as disclosed herein. The disclosure has been described in detail, it should be understood that various changes, substitutions and alterations can be made hereto without departing from the scope of the disclosure. For Example, although the invention is described as holding the housing **48** stationary and rotating actuator ring **44** the invention is not so limited and this operation may be reversed by holding the actuator ring stationary and rotating the housing without departing from the scope of the invention.

## Claims

1. An automated luminaire with a variable iris where the iris further comprises:
an iris housing comprising of
a stationary ring, and
an actuator ring;
a diaphragm formed by a plurality of iris leaves forming an aperture with
first sides directly attached to the stationary ring and
second sides engaged by the actuator ring; and
bearings between the actuator ring and the housing whereby when the actuator ring is actuated the size of the aperture changes.

2. The luminaire of claim 1 where bearings ride in bearing races.

3. The luminaire of claim 2 wherein the bearing races and bearings are self contained.

4. The luminaire of claim 1 where
the size of the aperture increases when the actuator ring is rotated in a first direction, and
the size of the aperture decreases when the actuator ring is rotated in a second direction.

5. An automated luminaire with a variable iris where the iris further comprises:
an iris housing comprising of:
a stationary ring, and
an actuator ring;
a diaphragm formed by a plurality of iris leaves forming an aperture with:
first sides directly attached to the stationary ring and
second sides engaged by the actuator ring; and
a bearing race and bearings between the actuator ring and the housing whereby when the actuator ring is actuated the size of the aperture changes.

6. An automated luminaire with a variable iris where the iris further comprises:
a plurality of overlapping leaves each with first and second sides forming a variable sized aperture diaphragm;
a stationary ring and actuator ring forming a housing
where the first side of the overlapping leaves are pivotably attached to the stationary ring; and
the second side of the overlapping leaves are engaged to move by the actuator ring whereby the aperture size changes when the actuator ring is actuated

7. The automated luminaire with iris of claim 6 wherein a bearing facilitates the rotation of the actuator ring relative to the stationary ring.

8. The automated luminaire with iris of claim 7 wherein the bearing sets between the stationary ring and actuator ring.

9. The luminaire of claim 6 where
the size of the aperture increases when the actuator ring is rotated in a first direction, and
the size of the aperture decreases when the actuator ring is rotated in a second direction.
